# EUROPEAN PATENT SPECIFICATION

(11) **EP 2 864 683 B1**
(45) Date of publication and mention of the grant of the patent: **17.08.2016**
(21) Application number: 13737444.3
(22) Date of filing: 20.06.2013
(51) Int. Cl.: F16L 27/093, F16L 41/00

(54) **BANJO ASSEMBLY HAVING TWO BANJO BOLT SEGMENTS WITH COMPLEMENTARY CONNECTING MEANS**
BANJOANORDNUNG MIT ZWEI BANJOSCHRAUBENSEGMENTEN MIT KOMPLEMENTÄREN VERBINDUNGSMITTELN
ENSEMBLE BANJO COMPORTANT DEUX SEGMENTS DE BOULON CREUX AVEC DES MOYENS DE RACCORD COMPLÉMENTAIRES

(30) Priority: 22.06.2012 NL 2009055
(43) Date of publication of application: 29.04.2015
(73) Proprietor: ASCO CONTROLS B.V., 3925 BD Scherpenzeel (NL)
(72) Inventor: VAN KOMMER, Robbie, NL-3941 GB Doorn (NL)
(74) Representative: EP&C
(86) International application number: PCT/NL2013/050437
(87) International publication number: WO 2013/191547

(56) References cited:
- DE-A1- 4 111 463
- DE-U1- 9 407 248
- DE-U1-202011 000 643
- GB-A- 2 171 770
- NL-C2- 1 024 487
- US-A- 3 967 838

## Description

The invention relates to a banjo assembly and to a method for coupling such a banjo assembly with a flow element.

Banjo assemblies are known in many variants, see for example NL-1024487, and comprises a banjo body and a banjo bolt. The banjo body here comprises an assembly of a cylindrical female rotation part and an outwardly projecting pipe-shaped hose-coupling part. Seen from above this assembly somewhat resembles the shape of a banjo. The banjo bolt in turn comprises a head part and a stem part, of which the stem part is built up out of a male rotation part and a threaded coupling part. This threaded coupling part can be screwed into a complementary screw hole of a motor or fuel pump, whereas a flexible fuel hose can be coupled to the hose-coupling part of the banjo body. Before screwing the threaded coupling part into the screw hole, the banjo bolt needs to be inserted with its male rotation part through the female rotation part. In this assembled position, bores and transverse openings inside the banjo body and banjo bolt together form an angled flow passage for fuel. With this the banjo body has the ability to rotate around the banjo bolt. An axial sealing ring is placed between the head part and the upper side of the female rotation part, and an axial sealing ring is placed between the lower side of the female rotation part and a housing part of the motor or fuel pump. Both sealing rings extend around the male rotation part.

A disadvantage here is that the banjo bolt needs to be screwed into the screw hole far enough for the axial sealing rings to get compressed in the axial direction and thus start being active and prevent fuel from leaking out. This tight strengthening of the screw coupling however makes it more difficult for the banjo body to be rotated to another desired position around the banjo bolt. Furthermore it might not always be possible to provide the motor, fuel pump or the like with a sufficiently deep enough screw hole for being able to screw in the banjo bolt far enough for starting to compress the axial sealing rings.

Another example of a banjo assembly is given in US-3,967,838 where fig. 5 shows a banjo bolt having a lower threaded coupling part delimited upwardly by a shoulder, above which a male rotation part is provided. A banjo body is placed from above over the male rotation part until it bears upon the shoulder. An upper part of the male rotation part is provided with a groove in which subsequently an elastic split ring is mounted which from then delimits the banjo body upwardly. A play is left free between the split ring and the top side of the banjo body, such that the body is able to slide somewhat up and down over the male rotation part in its axial direction. Inside the banjo assembly bores and transverse openings are provided which together form an angled flow passage. The banjo bolt further comprises an upper and lower groove above and beneath the transverse flow openings. Inside the upper and lower grooves radial sealing rings are placed. Those radial sealing rings bear against chamfered opening wall parts of an axial bore inside the female rotation part. The radial sealing rings are able to slide somewhat in the axial direction over the wall parts of the female rotation part.

With this known banjo assembly it is possible to first screw the threaded coupling part of the banjo bolt into a screw hole and to thereafter place the banjo body over it and delimit it upwards by the split ring.

A disadvantage here however is that a substantial play is left free between the split ring and the female rotation part. This leads to the banjo body being connected to the banjo bolt rather unstable and rattling. This may in turn lead to damaging particularly because of the lever-effect of the pipe-shaped coupling part of the banjo body. Furthermore, here also it is still necessary that the banjo bolt is screwed into the screw hole far enough for an axial sealing ring which needs to be positioned underneath the shoulder to get compressed in the axial direction and thus start being active and prevent medium from leaking out. This tight strengthening of this screw connection might not always be possible, for example when the screw hole into which the banjo bolt needs to be screwed can not be too deep.

DE 94 07 248 U1 discloses a banjo assembly which is connected to an opening of a device by means of a banjo bolt. The banjo bolt here is two-part and comprises a lower mounting part on top of which an upper head part is screwed. The mounting part at its lower side can also be provided with a thread by means of which it is screwed into the complementary threaded opening of the device. Between the mounting part and the head part an angled banjo body is rotatably delimited which is connected to a hose. Between the mounting part and the banjo body a radial slideable sealing ring is provided. Likewise, a radial slideable sealing ring is provided between the head part and the banjo body.

A disadvantage here is that specific measures need to be taken in order to prevent that the mounting part unscrews itself from out of the opening of the device, and in order to improve a sealing action between the banjo assembly and the device. Those specific measures are to glue, weld or solder the mounting part of the banjo bolt to the device. This permanent fixation however makes it impossible to remove or replace the banjo assembly from the device whenever this is desired. With this it is noted that the main reason for having the banjo bolt made out of two-parts is to be able to reach the interior flow channels of the banjo body and bolt even after the banjo bolt has been fixedly glued, welded or soldered to the device. If the banjo-bolt would have been made one-part as in NL-1024487, then it would only be possible to dismantle the banjo body from the banjo bolt by destructing the glued, welded or soldered connection between the banjo bolt and the device. This however is difficult and laborious and may well damage the banjo assembly and the device.

Another disadvantage of this known banjo assembly is that the lower sealing ring lies against a transition of an inwardly projecting edge of a tube part for connecting the hose to. Thus the lower sealing ring lies against a somewhat irregular stepped guiding surface of the banjo body. This has the disadvantage that an additional glued, welded or soldered connection needs to be provided between the tube part and the banjo body.

Yet another disadvantage of this known banjo assembly is that it is relative expensive and complex to manufacture. For example the mounting body is made with differing internal radii, causing the radii of the corresponding mounting and head parts to also be different, while also needing two different sizes of sealing rings, and a more complex shape of the inner end of the tube part at the side of the mounting body and head part.

DE 20 2011 000 643 U1 discloses a safety valve of which a mounting part at its upper side is provided with a thread via which it can be screwed into a complementary threaded opening of a device. Over a lower segment of the mounting part an angled sleeve part is placed. A head part is screwed onto the mounting part and delimits the sleeve part. Between the sleeve part and the mounting part an axial sealing ring is placed. Likewise, an axial sealing ring is placed between the sleeve part and the head part.

Like with the abovementioned NL-1024487, a disadvantage here is that on the one hand the safety valve needs to be screwed into the opening of the device far enough, while on the other hand the head part needs to be screwed onto the mounting part far enough for the axial sealing rings to get compressed in the axial direction and thus start being active and prevent medium from leaking out. This tight strengthening of the screw couplings however makes it more difficult for the angled sleeve part to be rotated to another desired position around the lower segment of the mounting part. Furthermore it might not always be possible to provide the device with a sufficiently deep enough screw hole for being able to screw in the safety valve far enough for starting to compress the axial sealing rings in cooperation with the delimitation of the head part.

US 2,555,869 discloses a pipe coupling which comprises a male component and a female component. The male component comprises a cylindrical shank. The female component comprises a head which comprises a so-called coupler-bore which fits snuggly but rotatable around the shank. Thus the female component can be placed onto and removed from the male component other by means of a simple push and pull action. The male component at its lower side is connected to a nipple by means of a straight screw connection. A lower end of the nipple is equipped with a conical thread for connection to another element.

A disadvantage here is that a screwing depth of the conical thread into the other element may differ substantially which immediately leads to a fluctuating height position of female component above the other element. Furthermore it is disadvantageous that the female component only gets positively restrained against separation from the male component for as long as fluid pressure is present inside the coupling.

The present invention aims to overcome one or more of the abovementioned disadvantages at least partly and/or to provide a usable alternative solution. In particular the invention aims to provide a play-free flexible and robust assembly of a banjo body and banjo bolt.

This aim is achieved by means of a banjo assembly according to claim 1. This assembly comprises a banjo body having a first coupling part and a female rotation part; as well as a banjo bolt having a second coupling part, a male rotation part and a head part. The female rotation part of the banjo body fits rotatable around the male rotation part of the banjo bolt, with the female rotation part at one side being delimited by means of the head part. A first medium passage is provided inside the banjo body which first medium passage extends in a first direction through the first coupling part. A second medium passage is provided inside the banjo bolt which second medium passage extends in a second direction through at least the male rotation part and the second coupling part. The first and second medium passages are in flow communication with each other via one or more openings which are provided inside the male rotation part. The first and second coupling parts are designed to be coupled to other elements. Sealing means are provided between the banjo body and the banjo bolt. The banjo bolt is made at least two-part and comprises a first and second segment. The first segment comprises the head part and a first section of the male rotation part, whereas the second segment comprises the second coupling part and a second section of the male rotation part. The two distinctive sections of the male rotation part are provided with complementary connection means which are connected releasable with each other.

According to the inventive thought, the second segment of the banjo bolt comprises an outer/external conical threaded second coupling part, also referred to as a male tapered threaded second coupling part, for making a screw coupling with a complementary threaded coupling opening provided inside another element with which it is to be connected. In particular this complementary threaded coupling opening inside the other element is likewise formed as an inner/internal conical threaded coupling opening, also referred to as a female tapered threaded coupling opening.

The conical threaded second coupling part thins out to the outer end, that is to say its outer diameter decreases along the length of the thread. The conical threaded coupling opening thins out to the inner end, that is to say its inner diameter decreases along the length of the thread. If a screw connection is made between the banjo bolt and an the other element, then the tapering automatically causes the connection to pull tight and become fluid or gas tight. The tapering of the threads allows them to form a seal when torqued as the flanks of the threads get firmly compressed against each other. As the threaded second coupling part and opening are tapered, an increasing outer thread diameter gets to compress into a decreasing inner thread diameter and finally forms a fixed connection and seal at the same time. No clearance remains between the crests and roots of the threads because of the taper.

Lubricating material like a lubricating paste or tape can be used to limit corrosion on the threads, which otherwise hinder future disassembly.

The conical threaded second coupling part has the advantage that it is able to provide a solid and leak free connection between the banjo assembly and the other element, without running the risk of this connection accidentally or unintentionally getting loose and/or starting to leak during use. Specific measures, like a gluing, welding or soldering of the second coupling part to the other element do not need to be taken. Thus it remains possible to easily and quickly disassemble the entire banjo assembly from the other element whenever this is needed or deemed desirable.

However with the conical threaded second coupling part and complementary threaded opening one never knows exactly how deep the banjo bolt can be screwed into the opening of the other element. This is no problem owing to the two-part banjo bolt of the invention, because this makes it advantageously possible to obtain a substantially play-free easily rotatable fitting of the banjo body around the banjo bolt. A minimum depth/length of the conical threaded second coupling part to be screwed into the other element is no longer necessary for being able to activate sealing means when coupled to the other element. The connection means between the two male rotation sections make it possible to on the one hand delimit the banjo body by means of the head part and on the other hand take away any play between the banjo body and banjo bolt without disturbing their ability to rotate relative to each other. Since a coupling depth/length of the conical threaded second coupling part with the complementary conical threaded coupling opening provided on the other element to which it is to be connected, no longer has an influence on the amount of play between the banjo body and banjo bolt, and no longer is necessary for obtaining a compression of some kind of axial sealing, it is now even possible to connect the banjo assembly according to the invention to a complementary conical threaded coupling opening provided in a non-flat wall part, like for example the curved outer wall of a medium pipe.

Furthermore it is now possible to first releasably connect the second segment of the banjo bolt to the other element, to then place the banjo body over it, and to then bring the first segment of the banjo bolt in place. With this the connecting of the first and second sections of the male rotation part of the banjo bolt segments with each other, in particular is done in such a way that the banjo bolt comes to lie substantially free of play in between the head part on one side and the other element on the other side.

The first coupling part in particular is designed as a male coupling organ which fits with a complementary female coupling opening provided inside another element to which it is to be connected, for example a flexible plastic hose which can be slit over and/or clamped onto the first coupling part.

The other element to which the conical threaded second coupling part is to be connected, may for example be a rigid element like a metal body which is equipped with the suitable conical threaded coupling opening.

The complementary connection means between the two banjo bolt segments may be of all kinds of types. They are of a length-variable type of which the connection depth/length can easily be differed during mounting. The complementary connection means between the two sections is a screw connection. One of the two sections then can be equipped with a screw hole whereas the other section then can be equipped with a complementary outer thread. The amount with which the screw hole and thread can be screwed into each other may differ, and in particular has sufficient length to be able to obtain the aimed substantially play-free constraining of the banjo body. For this the screw connection in particular has a length in the second direction which is sufficiently long that if the conical threaded second coupling part grips tight/maximally into its complementary coupling opening of the other element to which it is to be connected, that even then the screw connection between the two banjo bolt segments sufficiently grip into each other, preferably with a plurality of windings, to be able to deal with medium pressures occurring inside the banjo assembly during use. Thus a wide range of coupling depths/lengths of the conical threaded second coupling part can be covered without accidentally running the risk of closing of the transverse opening(s) and/or first medium passage inside the banjo assembly.

In a preferred embodiment the conical threaded second coupling part is formed by so-called National Pipe Thread Taper (NPT) which is a U.S. standard for tapered threads. In the alternative the conical threaded second coupling part may also be formed by so-called British Standard Pipe Taper thread (BSPT).

The taper rate for the threads may be ¹/₁₆, measured by the change of diameter (of the thread) over distance. The angle between the taper and the center axis of the second coupling part or coupling opening for example is 1° 47' 24" (1.7899°). Other taper rates and/or angles are also possible.

According to the invention the sealing means between the banjo body and the banjo bolt comprise first and second sealing rings which are positioned upstream and downstream of the transverse openings.

Furthermore according to the inventionboth of the sealing rings are a radial sealing ring which is placed inside a groove provided in one of the male and female rotation parts while being sealingly slidable in the second axial direction along the other one of the male and female rotation parts. Such axially slidable radially sealing rings are well able to maintain a leak-free sealing between the male rotation part sections and the female rotation part. This axially slidable radial sealing is irrespective of the axial positions of those two sections inside the female rotation part, and irrespective of with which amount/depth/length those two sections are connected with each other, and irrespective of the amount of play or even lack of play the banjo body has relative to the banjo bolt. An axial compressing of sealing means then is no longer absolutely necessary.

Further preferred embodiments are stated in the dependent sub claims.

The invention also relates to a method according to claims 7-9, and to an assembly according to claim 10.

The invention shall be further explained in more detail with reference to the accompanying drawings, in which:
Fig. 1a-d shows a cross sectional view, side view, top view and perspective view of an assembly of a banjo body and banjo bolt according to the invention;
Fig. 2 shows an exploded view of the assembly of fig. 1 together with an element in which the banjo bolt can be screwed;
Fig. 3a-b shows assembled states of fig. 2 with the banjo bolt being maximally and minimally screwed into the element; and
Fig. 4 shows a variant comprising a stack of two banjo bodies mounted to the element.

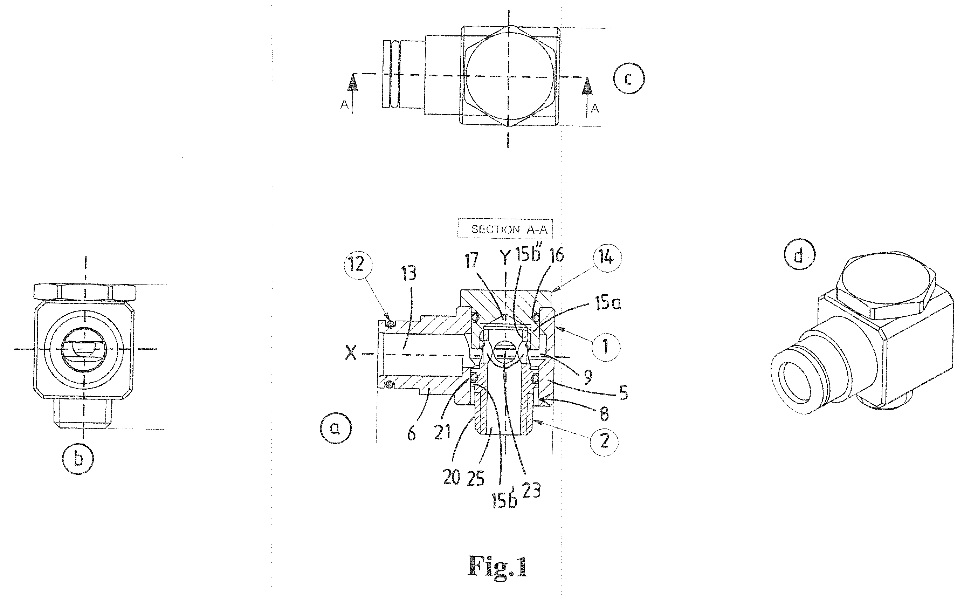

The banjo body of the assembly has been given the reference numeral 1 in fig. 1a-d, whereas the banjo bolt has been given the reference numeral 2. The banjo body 1 has an axial first direction x, whereas the banjo bolt 2 has an axial second direction y. The directions x and y are perpendicular to each other.

The banjo body 1 comprises a female rotation part 5 and a first coupling part 6. The female rotation part 5 and the first coupling part 6 are made as an integral component.

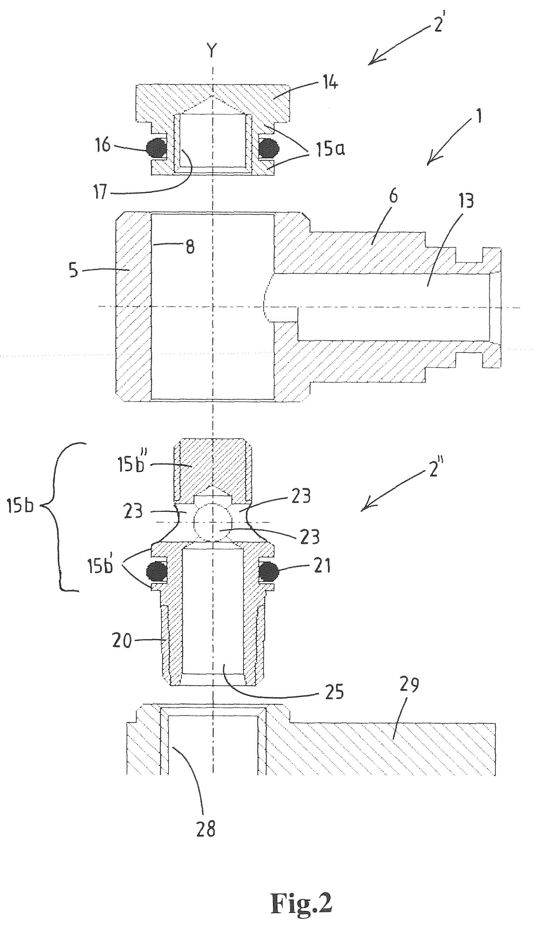

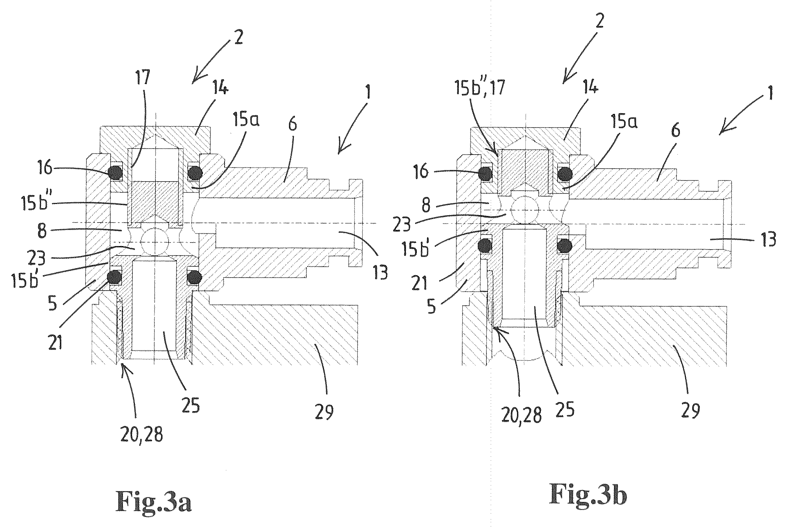

The female rotation part 5 comprises a substantially rectangular outer wall. Further the female rotation part 5 comprises a bore extending in the y-direction which forms a cylindrical rotation surface 8. Inside the cylindrical rotation surface 8 a circumferential medium flow groove 9 can be provided. Fig. 1 shows an embodiment with such a groove, fig. 2-4 show embodiments without such a groove.

The first coupling part 6 is tube-shaped and at its outer end comprises a circumferential groove inside which an O-ring 12 is placed. Thus a pipe, hose or the like can easily be coupled to the first coupling part 6 by sliding an outer end of the pipe, hose or the like over it. The first coupling part 6 comprises a bore extending in the x-direction which forms a first medium passage 13 which in the fig. 1 embodiment connects to the medium flow groove 9.

The banjo bolt 2 comprises a first segment 2' with a first upper section 15a and an enlarged head part 14 on top of it. The head part 14 is shaped as a nut. The head part 14 and the upper section 15a are made as an integral component. The upper section 15a is made cylindrical and is provided with a circumferential groove inside which an O-ring 16 is placed. Inside the free lower end of the upper section 15a a screw hole 17 with inner thread is present.

The banjo bolt 2 further comprises a second segment 2" with a second lower section 15b and a second coupling part 20 below it. The lower section 15b and the second coupling part 20 are made as an integral component. The second coupling part 20 is provided with an outer conical NPT thread. Directly adjacent the second coupling part 20, a lower end 15b' of the lower section 15b is made cylindrical and is provided there with a circumferential groove inside which an O-ring 21 is placed. A free upper end 15b" of the section 15b is made somewhat more slender compared to the lower end 15b'. This free upper end 15b" is provided with an outer thread which is complementary to the inner thread of the screw hole 17. Thus the inner threaded screw hole 17 inside the free lower end of the first section 15a and the outer threaded free upper end 15b" of the second section 15b form complementary connection means which are connected releasable with each other.

In between the lower end 15b' and the free upper end 15b" a total of four transverse flow openings 23 is provided inside the lower banjo bolt segment. Those four openings 23 are equally divided over the circumference.

The cylindrical upper section 15a and the cylindrical lower section end 15b' together form a male rotation part complementary to the female rotation part 5, and for this the section 15a and the section end 15b' have outer radii which are substantially equal to but slightly smaller than the inner radius of the cylindrical rotation surface 8.

The second segment 2" of the banjo bolt 2 has a bore extending over its entire length in the y-direction which forms a second medium passage 25. This medium passage 25 connects to the flow openings 23 which in turn connect to the medium flow groove 9 and/or to the first medium passage 13.

A mounting of the assembly preferably is started with screwing the second coupling part 20 of the second segment of the banjo bolt 2 into a complementary threaded screw hole 28 of an element 29 of which only an upper part is schematically shown, and which for example may be formed by a hole in an outer curved wall of a medium pipe (not shown). For this a screw driver, pin or the like can be pushed into the openings 23 after which a rotating action can be exerted. Then the banjo body 1 can be placed over it with the cylindrical rotation surface 8 of the banjo body 1 sliding in the axial direction y along the O-ring 21, after which the first segment 2' of the banjo bolt 2 can be screwed onto the second segment 2". For this a wrench or the like can be used to exert a rotating action onto the nut shaped head part 14. During this screwing, the O-ring 16 slides in the axial direction y along the cylindrical rotation surface 8 of the banjo body 1. The first segment 2' then can be screwed onto the second segment 2" as far as desired for obtaining a reliably sealed locking up of the banjo body 1. Owing to the complementary connection means the total length of the two segments 2' and 2" can be shortened so far until the banjo body 1 comes to lie substantially free of play but still easily rotatable in between the head part 14 and the element 29 to which the second coupling part 20 is connected.

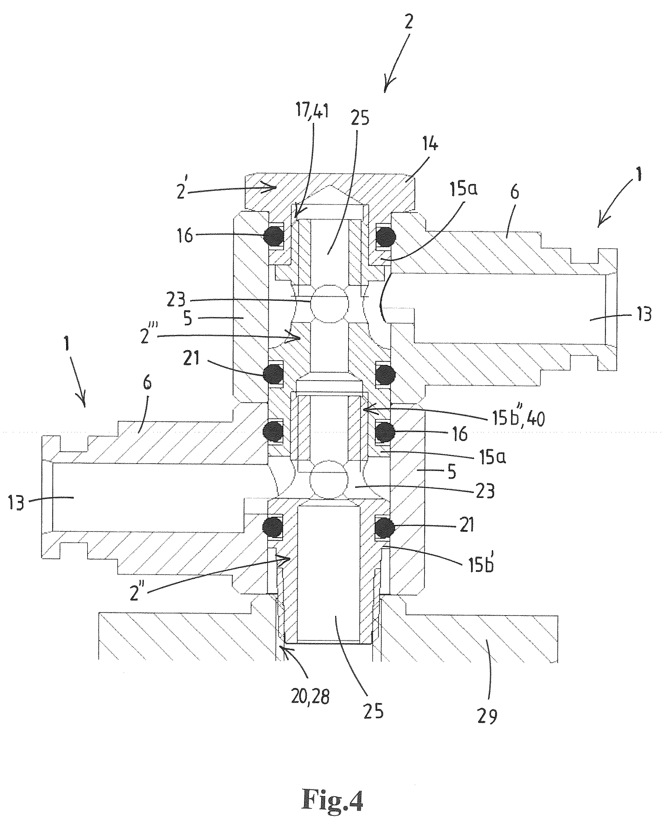

Fig. 4 shows a variant with a stack of two similar banjo bodies 1. In order to provide enough space for this stack, the banjo bolt 2 has been given a greater length, and is provided with a lower and upper set of openings 23 connecting the respective first medium passages 13 to the second medium passage 25. Between the first segment 2' and the second segment 2", the banjo bolt 2 now further comprises a third intermediate segment 2"'. This third segment 2'" on its lower side comprises a threaded screw hole 40 which fits complementary to the outer threaded free upper end 15b" of the second segment 2". Further, this third segment 2"' on its upper side comprises an outer threaded free upper end 41 which fits complementary to the threaded screw hole 17 of the first segment 2'.

During mounting/assembling, the total length of the three segments 2', 2" and 2"' can be shortened so far until both banjo bodies 1 come to lie substantially free of play but still easily rotatable in between the head part 14 and the element 29 to which the second coupling part 20 is connected. If desired it is possible to add more banjo bodies 1 to the stack, while using extra intermediate segments 2"'.

The banjo assembly can be used for all kinds of purposes, for example to make an angled rotatable flow connection between two elements in the petrochemical industry. The medium flowing through the assembly may be gaseous or fluid. Besides the embodiment shown various variants are possible. For example the shapes and dimensions of the components may differ. Also other types of couplings and/or connections can be used. Instead of enclosing an angle of 90 degrees the central axis of the banjo body and banjo bolt may also enclose larger or smaller angles, like for example ones between 45-135 degrees or even larger angles between 0-180 degrees. The first segment can be equipped with a third medium passage which connects to the other medium passages. This third medium passage then can connect to another element via a suitable third coupling part inside or on top of the head part. This other element can for example be some kind of measuring device like a thermometer. In the case that it is desired to connect a plurality of banjo bodies to an element, it is also possible to make integral units of the first and one or more third segments.

Thus the invention provides a play-free, user-friendly and economic banjo assembly which is robust and has an attractive outer appearance and which can be used in combination with conical thread and axially slidable sealing rings.

## Claims

1. Banjo assembly for forming an angled rotatable flow connection in between first and second coupling parts, comprising:
- a banjo body (1) having the first coupling part (6) and a female rotation part (5); and
- a banjo bolt (2) having the second coupling part (20), a male rotation part (15) and a head part (14);
the female rotation part (5) of the banjo body (1) fitting rotatable around the male rotation part (15) of the banjo bolt (2), while the female rotation part (5) at one side is delimited by means of the head part (14),
in which a first medium passage (13) is provided inside the banjo body (1) which first medium passage (13) extends in a first direction (x) through the first coupling part (6),
in which a second medium passage (25) is provided inside the banjo bolt (2) which second medium passage (25) extends in a second direction (y) through at least the male rotation part (15) and the second coupling part (20),
in which the first and second medium passage (13, 25) are in flow communication with each other via one or more flow openings (23) which are provided inside the male rotation part (15),
in which sealing means are provided between the banjo body (1) and the banjo bolt (2),
in which the banjo bolt (2) comprises a first and second segment (2', 2"),
the first segment (2') comprising the head part (14) and a first section (15a) of the male rotation part (15), and
the second segment (2") comprising the second coupling part (20) and a second section (15b) of the male rotation part (15),
in which the two sections (15a, 15b) are provided with complementary connection means (15b") which are connected releasable with each other, in which the complementary connection means (15b") between the two sections (15a, 15b) comprise a screw connection,
in which the second coupling part (20) of the banjo bolt (2) comprises an outer thread,
in which the sealing means comprise first and second sealing rings (16, 21) which are positioned in between the male and female rotation parts (5, 15) upstream and downstream of the one or more flow openings (23),
in which both sealing rings (16, 21) are radial sealing rings placed inside respective grooves provided in one of the male and female rotation parts (5, 15) while being sealingly slidable in the second direction (y) along the other one of the male and female rotation parts (5, 15), and
in which the outer thread is a conical thread.

2. Banjo assembly according to one of the preceding claims, wherein the first and second directions (x, y) of the medium passages (13, 25) enclose an angle of between 45-135 degrees.

3. Banjo assembly according to one of the preceding claims, wherein the banjo body (1) is delimited substantially play-free in between the head part (14) and a connection of the second coupling part (20) with another element.

4. Banjo assembly according to one of the preceding claims, wherein the banjo bolt (2) is provided with a circumferential groove (9) extending around the one or more openings (23) in the male rotation part (15), which circumferential groove (9) flows out into the first medium passage (13).

5. Banjo assembly according to one of the preceding claims, wherein the first and second sections (15a, 15b) of the male rotation part (15) have cylindrical rotation surfaces which have a substantially equal and constant outer radius.

6. Banjo assembly according to claim 5, wherein the female rotation part (5) has a cylindrical rotation surface which has a substantially constant inner radius.

7. Method for connecting a banjo assembly according to one of the preceding claims with another element in order to obtain a flow connection therewith, comprising the steps:
- providing the other element with a conical threaded coupling opening complementary to the conical threaded second coupling part (20) of the banjo assembly;
- dismounting the first and second segments (2', 2") of the banjo bolt (2) of each other;
- connecting the second segment (2") with its conical threaded second coupling part (20) to the complementary coupling opening of the other element;
- placing the banjo body (1) with its female rotation part (5) over the second section (15b) of the male rotation part (15);
- placing the first segment (2') of the banjo bolt (2) with its first section (15a) of the male rotation part (15) inside the female rotation part (5) and connecting the first and second sections (15a, 15b) of the male rotation part (15) with each other.

8. Method according to claim 7, wherein during the step of placing the banjo body (1) with its female rotation part (5) over the second section (15b) of the male rotation part (15), the banjo body (1) comes to lie against the other element, and wherein subsequently the first segment (2') is connected to the second segment (2") in such a way that the banjo body (1) comes to lie substantially free of play in between the head part (14) on one side and the other element on the other side.

9. Method according to claim 7 or 8, wherein the providing of the other element with the complementary conical threaded coupling opening takes place at a curved wall part of this other element.

10. Assembly of a banjo assembly according to one of the preceding claims with an element which is provided with a conical threaded coupling opening which is provided inside a curved wall part of the element and which conical threaded coupling opening is complementary to the conical threaded second coupling part (20).

## Patentansprüche

1. Banjoanordnung zum Bilden einer abgewinkelten drehbaren Strömungsverbindung zwischen erstem und zweitem Kopplungsteil, die Folgendes aufweist:
- einen Banjokörper (1), der das erste Kopplungsteil (6) und ein weibliches Rotationsteil (5) aufweist; und
- eine Banjoschraube (2), die das zweite Kopplungsteil (20), ein männliches Rotationsteil (15) und ein Kopfteil (14) aufweist;
wobei das weibliche Rotationsteil (5) des Banjokörpers (1) drehbar um das männliche Rotationsteil (15) der Banjoschraube (2) passt, während das weibliche Rotationsteil (5) an einer Seite vom Kopfteil (14) begrenzt ist,
wobei im Inneren des Banjokörpers (1) ein erster Mediendurchgang (13) bereitgestellt ist, wobei dieser erste Mediendurchgang (13) sich in einer ersten Richtung (x) durch das erste Kopplungsteil (6) erstreckt,
wobei ein zweiter Mediendurchgang (25) im Inneren der Banjoschraube (2) bereitgestellt ist, wobei dieser zweite Mediendurchgang (25) sich in einer zweiten Richtung (y) durch wenigstens das männliche Rotationsteil (15) und das zweite Kopplungsteil (20) erstreckt,
wobei der erste und der zweite Mediendurchgang (13, 25) über eine oder mehrere Durchflussöffnungen (23), die im Inneren des männlichen Rotationsteils (15) bereitgestellt sind, miteinander in Strömungsverbindung sind,
wobei zwischen dem Banjokörper (1) und der Banjoschraube (2) Dichtmittel bereitgestellt sind,
wobei die Banjoschraube (2) ein erstes und ein zweites Segment (2', 2") aufweist,
wobei das erste Segment (2') das Kopfteil (14) und einen ersten Abschnitt (15a) des männlichen Rotationsteils (15) aufweist und
das zweite Segment (2") das zweite Kopplungsteil (20) und einen zweiten Abschnitt (15b) des männlichen Rotationsteils (15) aufweist,
wobei die zwei Abschnitte (15a, 15b) mit ergänzenden Verbindungsmitteln (15b") versehen sind, die lösbar miteinander verbunden sind, wobei die ergänzenden Verbindungsmittel (15b") zwischen den zwei Abschnitten (15a, 15b) eine Schraubverbindung umfassen,
wobei das zweite Kopplungsteil (20) der Banjoschraube (2) ein Außengewinde aufweist,
wobei die Dichtmittel einen ersten und einen zweiten Dichtungsring (16, 21) aufweisen, die zwischen männlichem und weiblichem Rotationsteil (5, 15) stromaufwärts und stromabwärts der einen oder mehreren Strömungsöffnungen (23) positioniert sind,
wobei beide Dichtungsringe (16, 21) Radialdichtringe sind, die in jeweilige Nuten gelegt sind, die in einem von dem männlichen und dem weiblichen Rotationsteil (5, 15) bereitgestellt sind, während sie abdichtend in der zweiten Richtung (y) an dem anderen von dem männlichen und dem weiblichen Rotationsteil (5, 15) entlang gleitfähig sind, und
wobei das Außengewinde ein konisches Gewinde ist.

2. Banjoanordnung nach einem der vorhergehenden Ansprüche, wobei die erste und die zweite Richtung (x, y) der Mediendurchgänge (13, 25) einen Winkel zwischen 45 und 135 Grad einschließen.

3. Banjoanordnung nach einem der vorhergehenden Ansprüche, wobei der Banjokörper (1) im Wesentlichen spielfrei zwischen dem Kopfteil (14) und einer Verbindung des zweiten Kopplungsteils (20) mit einem weiteren Element begrenzt ist.

4. Banjoanordnung nach einem der vorhergehenden Ansprüche, wobei die Banjoschraube (2) mit einer Umfangsnut (9) versehen ist, die sich um die eine oder die mehreren Öffnungen (23) im männlichen Rotationsteil (15) erstreckt, wobei diese Umfangsnut (9) in den ersten Mediendurchgang (13) hinausläuft.

5. Banjoanordnung nach einem der vorhergehenden Ansprüche, wobei der erste und der zweite Abschnitt (15a, 15b) des männlichen Rotationsteils (15) zylindrische Rotationsflächen mit einem im Wesentlichen gleichen und konstanten Außenradius haben.

6. Banjoanordnung nach Anspruch 5, wobei das weibliche Rotationsteil (5) eine zylindrische Rotationsfläche mit einem im Wesentlichen konstanten Innenradius hat.

7. Verfahren zum Verbinden einer Banjoanordnung nach einem der vorhergehenden Ansprüche mit einem anderen Element, um damit eine Durchflussverbindung zu erhalten, wobei das Verfahren die folgenden Schritte aufweist:
- Versehen des anderen Elements mit einer mit einem konischen Gewinde versehenen Kopplungsöffnung, ergänzend zu dem mit einem konischen Gewinde versehenen zweiten Kopplungsteil (20) der Banjoanordnung;
- Abmontieren des ersten und des zweiten Segments (2', 2") der Banjoschraube (2) voneinander;
- Verbinden des zweiten Segments (2") mit seinem mit einem konischen Gewinde versehenen zweiten Kopplungsteil (20) mit der ergänzenden Kopplungsöffnung des anderen Elements;
- Aufsetzen des Banjokörpers (1) mit seinem weiblichen Rotationsteil (5) auf den zweiten Abschnitt (15b) des männlichen Rotationsteils (15);
- Einsetzen des ersten Segments (2') der Banjoschraube (2) mit seinem ersten Abschnitt (15a) des männlichen Rotationsteils (15) in das Innere des weiblichen Rotationsteils (5) und Verbinden des ersten und des zweiten Abschnitts (15a, 15b) des männlichen Rotationsteils (15) miteinander.

8. Verfahren nach Anspruch 7, wobei der Banjokörper (1) während des Schritts des Aufsetzens des Banjokörpers (1) mit seinem weiblichen Rotationsteil (5) auf den zweiten Abschnitt (15b) des männlichen Rotationsteils (15) an dem anderen Element zu liegen kommt und wobei anschließend das erste Segment (2') so mit dem zweiten Segment (2") verbunden wird, dass der Banjokörper (1) im Wesentlichen spielfrei zwischen dem Kopfteil (14) auf einer Seite und dem anderen Element auf der anderen Seite zu liegen kommt.

9. Verfahren nach Anspruch 7 oder 8, wobei das Versehen des anderen Elements mit der ergänzenden, mit einem konischen Gewinde versehenen Kopplungsöffnung an einem gekrümmten Wandteil dieses anderen Elements stattfindet.

10. Zusammenfügung einer Banjoanordnung nach einem der vorhergehenden Ansprüche mit einem Element, das mit einer mit einem konischen Gewinde versehenen Kopplungsöffnung versehen ist, die im Inneren eines gekrümmten Wandteils des Elements bereitgestellt ist, und wobei diese mit einem konischen Gewinde versehene Kopplungsöffnung das mit einem konischen Gewinde versehene zweite Kopplungsteil (20) ergänzt.

## Revendications

1. Ensemble banjo pour former un raccordement d'écoulement rotatif coudé entre des première et seconde parties de couplage, comprenant :
un corps creux (1) ayant la première partie de couplage (6) et une partie de rotation femelle (5) ; et
un boulon creux (2) ayant la seconde partie de couplage (20), une partie de rotation mâle (15) et une partie de tête (14) ;
la partie de rotation femelle (5) du corps creux (1) s'adaptant en rotation autour de la partie de rotation mâle (15) du boulon creux (2), alors que la partie de rotation femelle (5) au niveau d'un côté, est délimitée au moyen de la partie de tête (14),
dans lequel un premier passage de milieu (13) est prévu à l'intérieur du corps creux (1), lequel premier passage de milieu (13) s'étend dans une première direction (x) à travers la première partie de couplage (6),
dans lequel un second passage de milieu (25) est prévu à l'intérieur du boulon creux (2), lequel second passage de milieu (25) s'étend dans une seconde direction (y) à travers au moins la partie de rotation mâle (15) et la seconde partie de couplage (20),
dans lequel les premier et second passages de milieu (13, 25) sont en communication d'écoulement entre eux via une ou plusieurs ouvertures d'écoulement (23) qui sont prévues à l'intérieur de la partie de rotation mâle (15),
dans lequel des moyens d'étanchéité sont prévus entre le corps creux (1) et le boulon creux (2),
dans lequel le boulon creux (2) comprend un premier et un second segment (2', 2"),
le premier segment (2') comprenant la partie de tête (14) et une première section (15a) de la partie de rotation mâle (15), et
le second segment (2") comprenant la seconde partie de couplage (20) et une seconde section (15b) de la partie de rotation mâle (15),
dans lequel les deux sections (15a, 15b) sont prévues avec des moyens de raccordement complémentaires (15b") qui sont raccordés de manière amovible entre eux, dans lequel les moyens de raccordement complémentaires (15b") entre les deux sections (15a, 15b) comprennent un raccordement à vis,
dans lequel la seconde partie de couplage (20) du boulon creux (2) comprend un filetage externe,
dans lequel les moyens d'étanchéité comprennent des première et seconde bagues d'étanchéité (16, 21) qui sont positionnées entre les parties de rotation mâle et femelle (5, 15) en amont et en aval des une ou plusieurs ouvertures d'écoulement (23),
dans lequel les deux bagues d'étanchéité (16, 21) sont des bagues d'étanchéité radiales placées à l'intérieur de rainures respectives prévues dans l'une des parties de rotation mâle et femelle (5, 15) tout en pouvant coulisser de manière étanche dans la seconde direction (y) le long de l'autre parmi les parties de rotation mâle et femelle (5, 15), et
dans lequel le filetage externe est un filetage conique.

2. Ensemble banjo selon l'une des revendications précédentes, dans lequel les première et seconde directions (x, y) des passages de milieu (13, 25) enferment un angle compris entre 45 et 135 degrés.

3. Ensemble banjo selon l'une des revendications précédentes, dans lequel le corps creux (1) est délimité sensiblement sans jeu entre la partie de tête (14) et un raccordement de la seconde partie de couplage (20) avec un autre élément.

4. Ensemble banjo selon l'une des revendications précédentes, dans lequel le boulon creux (2) est prévu avec une rainure circonférentielle (9) s'étendant autour des une ou plusieurs ouvertures (23) dans la partie de rotation mâle (15), laquelle rainure circonférentielle (9) sort dans le premier passage de milieu (13).

5. Ensemble banjo selon l'une des revendications précédentes, dans lequel les première et seconde sections (15a, 15b) de la partie de rotation mâle (15) ont des surfaces de rotation cylindriques qui ont un rayon externe constant et sensiblement identique.

6. Ensemble banjo selon la revendication 5, dans lequel la partie de rotation femelle (5) a une surface de rotation cylindrique qui a un rayon interne sensiblement constant.

7. Procédé pour raccorder un ensemble banjo selon l'une des revendications précédentes avec un autre élément afin d'obtenir un raccordement d'écoulement avec ce dernier, comprenant les étapes consistant à :
prévoir l'autre élément avec une ouverture de couplage conique filetée complémentaire de la seconde partie de couplage conique filetée (20) de l'ensemble banjo ;
démonter les premier et second segments (2', 2") du boulon creux (2) l'un par rapport à l'autre ;
raccorder le second segment (2") avec sa seconde partie de couplage conique filetée (20) à l'ouverture de couplage complémentaire de l'autre élément ;
placer le corps creux (1) avec sa partie de rotation femelle (5) sur la seconde section (15b) de la partie de rotation mâle (15) ;
placer le premier segment (2') du boulon creux (2) avec sa première section (15a) de la partie de rotation mâle (15) à l'intérieur de la partie de rotation femelle (5) et raccorder les première et seconde sections (15a, 15b) de la partie de rotation mâle (15) entre elles.

8. Procédé selon la revendication 7, dans lequel pendant l'étape consistant à placer le corps creux (1) avec sa partie de rotation femelle (5) sur la seconde section (15b) de la partie de rotation mâle (15), le corps creux (1) vient contre l'autre élément et dans lequel ensuite le premier segment (2') est raccordé au second segment (2") de sorte que le corps creux (1) est sensiblement dépourvu de jeu entre la partie de tête (14) sur un côté et l'autre élément de l'autre côté.

9. Procédé selon la revendication 7 ou 8, dans lequel l'étape consistant à prévoir l'autre élément avec l'ouverture de couplage conique filetée complémentaire a lieu au niveau d'une partie de paroi incurvée de cet autre élément.

10. Assemble d'un ensemble banjo selon l'une des revendications précédentes, avec un élément qui est prévu avec une ouverture de couplage conique filetée qui est prévue à l'intérieur d'une partie de paroi incurvée de l'élément et laquelle ouverture de couplage conique filetée est complémentaire de la seconde partie de couplage conique filetée (20).
